(19) Europäisches Patentamt / European Patent Office / Office européen des brevets

(11) **EP 4 611 366 A1**

(12) **EUROPEAN PATENT APPLICATION**

(43) Date of publication:
03.09.2025 Bulletin 2025/36

(21) Application number: 25157873.8

(22) Date of filing: 14.02.2025

(51) International Patent Classification (IPC):
*H04N 13/106* (2018.01)

(52) Cooperative Patent Classification (CPC):
**H04N 13/106; H04N 2013/0081**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.02.2024 JP 2024030009**

(71) Applicant: **Canon Kabushiki Kaisha
Tokyo 146-8501 (JP)**

(72) Inventor: **TSUKAHARA, Azusa
Tokyo 146-8501 (JP)**

(74) Representative: **Canon Europe Limited
European Intellectual Property Group
4 Roundwood Avenue
Stockley Park
Uxbridge UB11 1AF (GB)**

(54) **IMAGE PROCESSING APPARATUS, IMAGING APPARATUS, IMAGE PROCESSING METHOD, AND STORAGE MEDIUM**

(57) An image processing apparatus configured to calculate a disparity value from first and second images includes at least one processor or circuit configured to function as an image setting unit configured to set a specific region in the first image as a standard image and a specific region in the second image as a reference image, a shifted image generating unit configured to generate a shifted standard image by shifting the standard image based on a first shift amount and generate a shifted reference image by shifting the reference image based on a second shift amount, and a disparity calculating unit configured to calculate the disparity value based on the first and second shift amounts. The shifted image generating unit sets one of the first and second shift amounts in fractional pixel units.

**FIG.1A**

100 IMAGING APPARATUS
OPTICAL AXIS 130
120 IMAGING UNIT
121 IMAGE SENSOR
123 EXIT PUPIL
110 IMAGE PROCESSING APPARATUS
122 OPTICAL SYSTEM

**Description**

BACKGROUND OF THE INVENTION

Field of the Invention

The present invention relates to an image processing apparatus configured to calculate disparity from a plurality of images.

Description of the Related Art

A block matching method is a method used to acquire a plurality of images to calculate three-dimensional information. With this method, initially, two images (hereinafter, respectively referred to as "A-image" and "B-image") are captured from different viewpoints, and a region 1 is set to a standard image in the A-image, and a region 2 is set to a reference image in the B-image. Then, a search for a region 2 that is most similar to the region 1 is performed while the position of the region 2 is being changed. Distance calculation is performed based on the positional displacement between the regions 1 and 2 using the principle of triangulation. The search uses correlation values indicating dissimilarity (or similarity) between regions in different images, and determination of similar regions is performed. The positional displacement is referred to as disparity, and distance information can be acquired using a publicly-known method, such as triangulation.

Normal block matching methods can calculate disparity only in integral pixel units. To calculate disparity with greater accuracy, a subpixel estimation method is normally used. This is a method for calculating disparity in fractional pixel units by fitting correlation values to a function.

Luminance values of the same object may differ between the A-image and the B-image due to an effect of an angle of view or differences in exposure time. A pre-process for correcting the luminance value deviation may be implemented, but the luminance value deviation may not be fully corrected, or deviations from correction values may occur due to some influence. Performing the subpixel estimation method with the presence of luminance value deviations between the A-image and the B-image results in the calculation of correction values that differ from an ideal state, and incorrect function fitting results in the calculation of incorrect disparity.

Regarding the decrease in disparity calculation accuracy, Japanese Patent No. 4941565 discusses a method for applying filter processing to at least one of the A-image and the B-image. In this method, after the first disparity calculation, the A-image and the B-image are shifted relative to each other by a shift amount corresponding to the disparity. Thereafter, the disparity calculation is performed again.

In the method discussed in Japanese Patent No. 4941565, if luminance value deviations are present between the A-image and the B-image, the first disparity calculation may be incorrect, and filter processing may not be performed accurately. This may result in the calculated disparity containing errors.

SUMMARY OF THE INVENTION

According to a first aspect of the present invention, there is provided an image processing apparatus according to claims 1 to 13. According to a second aspect of the present invention, there is provided an imaging apparatus according to claims 14 to 16. According to a third aspect of the present invention, there is provided an image processing method according to claim 17. According to a fourth aspect of the present invention, there is provided a computer-readable storage medium according to claim 18.

Further features of the present invention will become apparent from the following description of exemplary embodiments with reference to the attached drawings.

BRIEF DESCRIPTION OF THE DRAWINGS

Figs. 1A to 1C are explanatory diagrams illustrating an imaging apparatus including an image processing apparatus according to a First Embodiment.
Fig. 2 is an explanatory diagram illustrating light beams received by an image sensor according to the First Embodiment.
Figs. 3A and 3B are explanatory diagrams illustrating a subpixel estimation method in the absence of luminance value deviations.
Figs. 4A and 4B are explanatory diagrams illustrating a subpixel estimation method in the presence of luminance value deviations.

Figs. 5A and 5B are explanatory diagrams illustrating the image processing apparatus according to the First Embodiment.

Figs. 6A to 6C are explanatory diagrams illustrating an image setting unit according to the First Embodiment.

Figs. 7A to 7C are explanatory diagrams illustrating the image setting unit according to the First Embodiment.

Fig. 8 is an explanatory diagram illustrating an imaging apparatus according to a Second Embodiment.

Figs. 9A and 9B are explanatory diagrams illustrating a shifted image generating unit according to the First Embodiment.

DESCRIPTION OF THE EMBODIMENTS

The present invention will be described in detail below with reference to the embodiments and the accompanying drawings. The present invention is not limited to the description of the embodiments. The embodiments may be combined as necessary.

<First Embodiment>

(Apparatus Configuration)

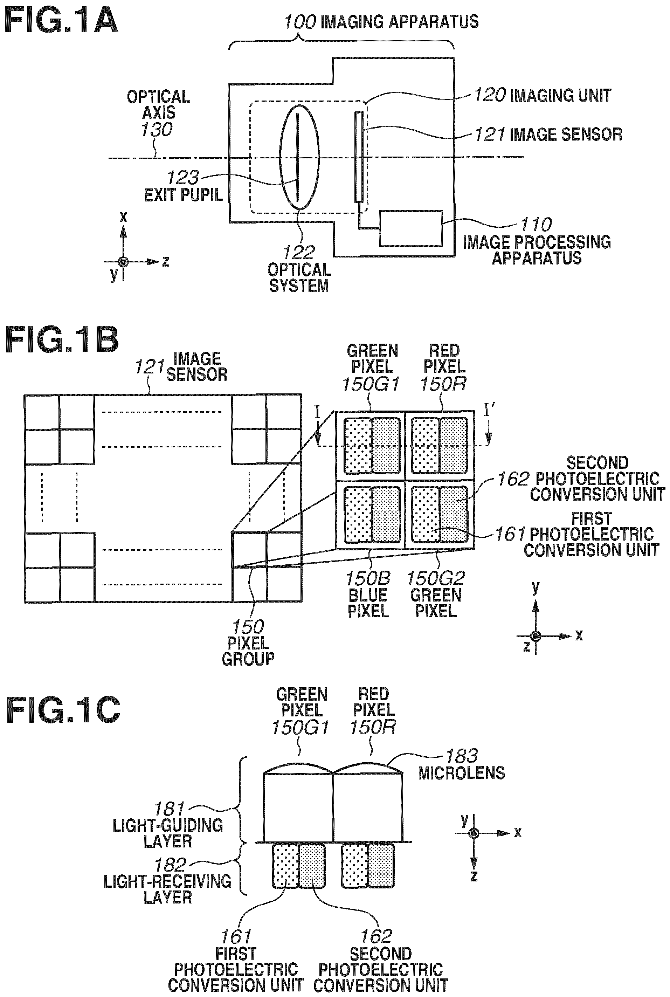

Figs. 1A to 1C are diagrams schematically illustrating a configuration of an imaging apparatus according to a first embodiment of the present invention.

In Fig. 1A, an imaging apparatus 100 includes an image processing apparatus 110 and an imaging unit 120.

The imaging unit 120 includes an image sensor 121 and an optical system 122. The image processing apparatus 110 can be configured using logic circuits. Further, as another form, the image processing apparatus 110 may include a central processing unit (CPU) and a memory storing arithmetic processing programs.

The optical system 122 is an imaging lens of the imaging apparatus 100 and has the function of forming a subject image on the image sensor 121 (on the image sensor). The optical system 122 includes a plurality of lens units (not illustrated) and a diaphragm (not illustrated) and includes an exit pupil 123 at a position at a predetermined distance from the image sensor 121. In the present specification, the z-axis is defined as being parallel to an optical axis 130 of the optical system 122. The x- and y-axes are axes that are orthogonal to each other and to the optical axis 130.

The image sensor 121 includes a complementary metal-oxide-semiconductor (CMOS) or charge-coupled device (CCD) sensor. The subject image formed on the image sensor 121 (on the image sensor) through the optical system 122 is photoelectrically converted by the image sensor 121 to generate an image signal based on the subject image.

Fig. 1B is an xy sectional view of the image sensor 121. The image sensor 121 includes a plurality of arrays of 2-row by 2-column pixel groups 150. In each pixel group 150, green pixels 150G1 and 150G2 are arranged diagonally, and a red pixel 150R and a blue pixel 150B are arranged in the remaining two pixels.

Fig. 1C is a diagram schematically illustrating an I-I' section of the pixel group 150. Each pixel includes a light-receiving layer 182 and a light-guiding layer 181. In the light-receiving layer 182, two photoelectric conversion units (first photoelectric conversion unit 161, second photoelectric conversion unit 162) for photoelectrically converting the received light are arranged. In the light-guiding layer 181, a microlens 183 for efficiently guiding light beams incident on the corresponding pixel to the photoelectric conversion units, a color filter (not illustrated) that transmits light of a predetermined wavelength range, and traces (not illustrated) for image reading and pixel driving are arranged. Each pixel is provided with a trace (not illustrated) and can transmit image signals (output signals) to the image processing apparatus 110 through the trace. While Figs. 1B and 1C illustrate an example of a photoelectric conversion unit divided into two along a single pupil segmentation direction (x-axis direction), an image sensor with a plurality of photoelectric conversion units divided along two pupil segmentation directions (x- and y-axis directions) is used according to specifications. The pupil segmentation direction and the number of segments are optional.

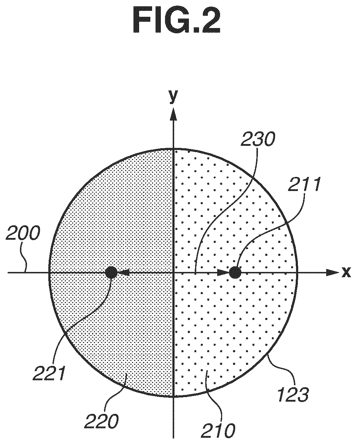

Fig. 2 illustrates an exit pupil 123 of the optical system 122 viewed from an intersection of the optical axis 130 and the image sensor 121 (image height at the center). A first light beam that has passed through a first pupil region 210 is incident on the photoelectric conversion unit 161, and a second light beam that has passed through a second pupil region 220 is incident on the photoelectric conversion unit 162. The first and second pupil regions 210 and 220 are different regions in the exit pupils 123. In each pixel, the photoelectric conversion units 161 and 162 photoelectrically convert the incident light beams to generate image signals corresponding to an A-image (first image) and an image signal corresponding to a B-image (second image), respectively. The generated image signals are transmitted to the image processing apparatus 110.

In Fig. 2, the centroid position (first centroid position 211) of the first pupil region 210 and the centroid position (second centroid position 221) of the second pupil region 220 are illustrated. In the Present Embodiment, the first centroid position 211 is decentered (shifted) from the center of the exit pupil 123 along a first axis 200. In contrast, the second centroid position 221 is decentered (shifted) along the first axis 200 in the opposite direction to the first centroid position 211. The direction connecting the first centroid position 211 and the second centroid position 221 is referred to as the pupil segmentation direction. The distance between the first centroid position 211 and the second centroid position 221 serves as a baseline length 230.

(Description of Image Processing Apparatus)

Configuration of Image Processing Apparatus

The image processing apparatus 110 according to the Present Embodiment will be described below. The image processing apparatus 110 acquires a plurality of pieces of image information and calculates disparity between the images.

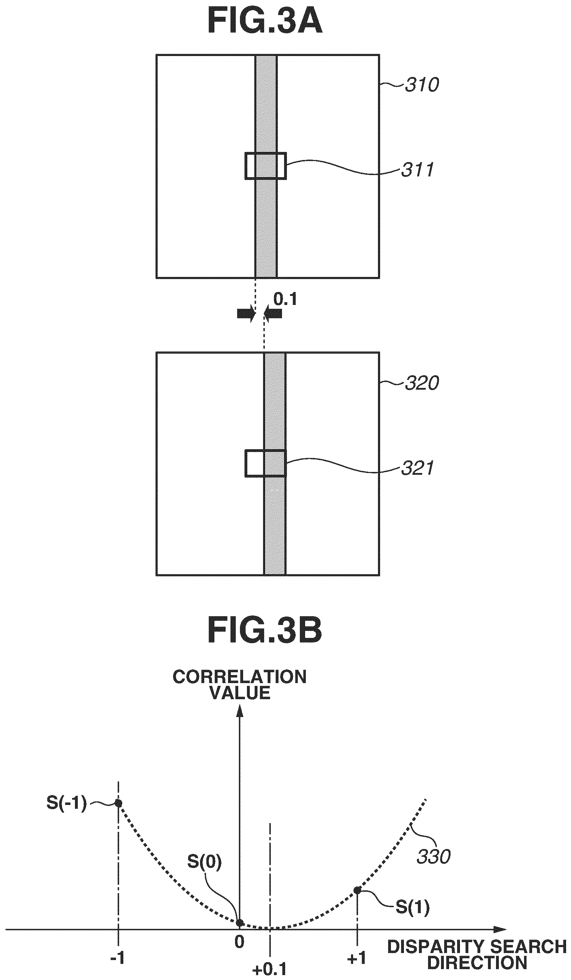

Initially, the effect of luminance value deviations on the detected disparity will be described below. Initially, a typical example of subpixel estimation in the absence of luminance value deviations between the images A and B will be described below with reference to Figs. 3A and 3B. Hereinafter, it is assumed that the images A and B have the same light and shade and a disparity of +0.1 pixels. Fig. 3A is a diagram illustrating a positional relationship between an A-image 310 of a subject with a line pattern of dark regions near the center, a standard image 311, a B-image 320, and a reference image 321 acquired using the imaging apparatus 100. Fig. 3B illustrates correlation values between the standard image 311 and the reference image 321 obtained by shifting the reference image 321 set for the standard image 311.

The correlation values here are assumed to be the sum of squared differences (SSD), and the smaller the value, the higher the correlation, and the greater the value, the lower the correlation. Fitting the correlation values S(0), S(1), and S(-1) corresponding to the reference image positions shifted by 0 pixels, +1 pixel, and -1 pixel, respectively, with a quadratic function produces the shape of a curve 330. The curve 330 has its minimum value at the position of +0.1 pixels, which matches the disparity of +0.1 pixels between the images A and B.

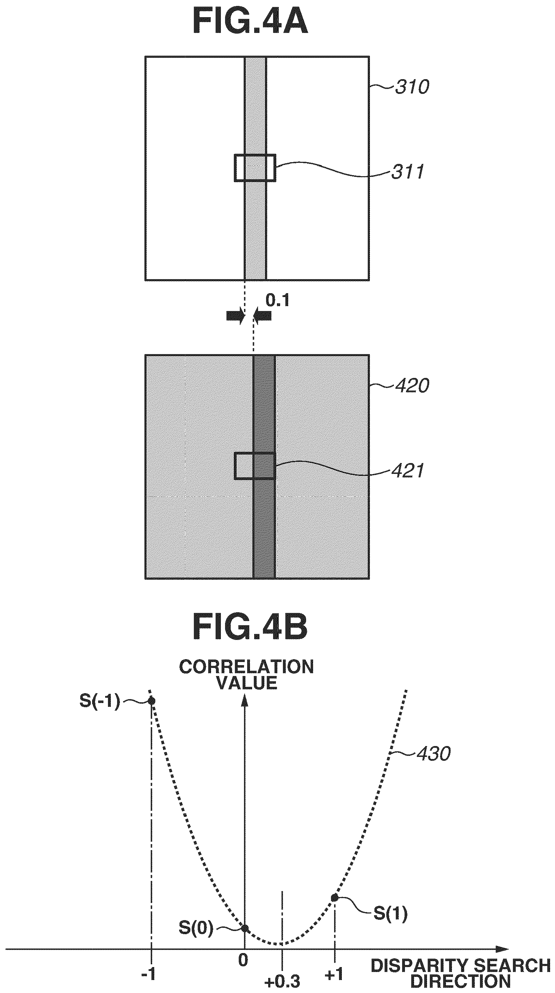

Next, a typical example of subpixel estimation in the presence of luminance value deviations between the images A and B will be described below with reference to Figs. 4A and 4B. Fig. 4A is a diagram illustrating a positional relationship between the A-image 310 of the same subject as in Fig. 3A, the standard image 311, a B-image 420, and a reference image 421. The B-image 420 here is lower in overall luminance than the A-image 310. Fig. 4B illustrates correlation values between the standard image 311 and the reference image 421 obtained by shifting the reference image 421 set for the standard image 311. Fitting the correlation values S(0), S(1), and S(-1) corresponding to the reference image positions shifted by 0 pixels, +1 pixel, and -1 pixel, respectively, with a quadratic function produces the shape of a curve 430. The curve 430 has its minimum value at the position of +0.3 pixels, which does not match the disparity of +0.1 pixels between the images A and B.

As described above, if the correlation values that deviate from the true values due to the presence of luminance value deviations between the images A and B are fitted to a function, the calculated disparity will contain an error.

The Present Embodiment reduces the error by generating images by shifting both reference and reference images in fractional pixel units and then calculating correlation values between the generated images, without fitting to a function.

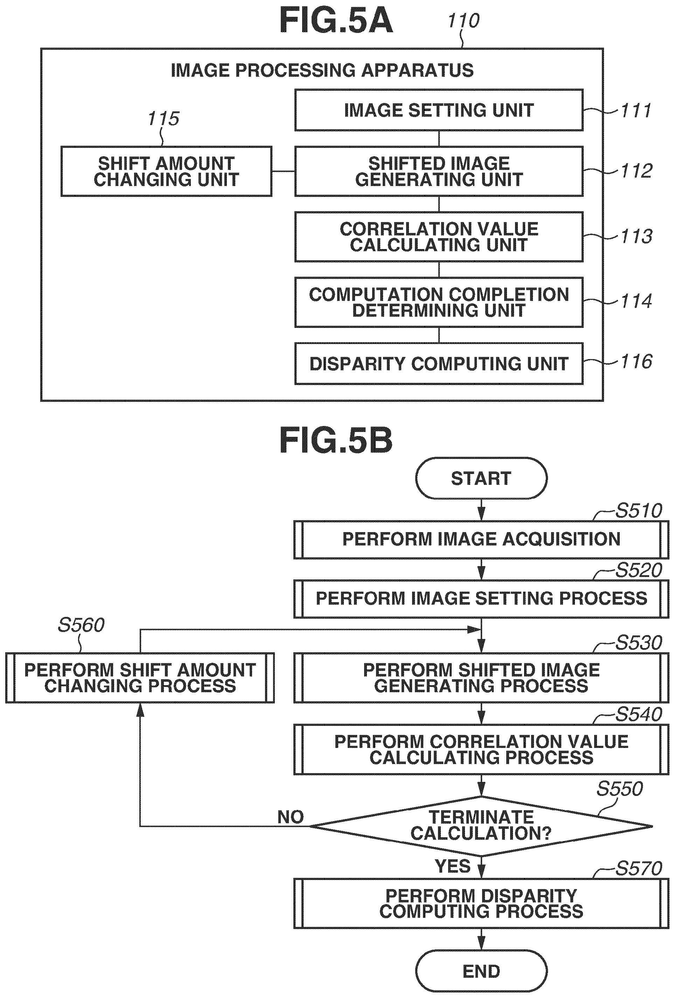

Fig. 5A is a diagram schematically illustrating a configuration of the image processing apparatus 110 according to the Present Embodiment of the present invention. In Fig. 5A, the image processing apparatus 110 includes an image setting unit 111, a shifted image generating unit 112, a correlation value calculating unit 113, a computation termination determining unit 114, a shift amount changing unit 115, and a disparity computing unit 116.

Fig. 5B is a flowchart illustrating the operation of the image processing apparatus 110 according to the Present Embodiment. Once image processing according to the Present Embodiment is initiated, the processing proceeds to step S510.

In step S510, imaging is performed using the imaging apparatus 100 to generate and acquire a set of images including the images A and B, and the acquired images are stored in a main memory (not illustrated).

A process of correcting mainly the imbalance in light intensity caused by vignetting in the optical system 122 may be performed on the images acquired in step S510. Specifically, the balance in light intensity can be corrected by performing correction, based on a result of pre-capturing a surface light source with uniform luminance by the imaging apparatus 100, such that the luminance values of the images remain approximately constant irrespective of the angle of view. For example, filter processing using a band-pass filter or a low-pass filter may be applied to the acquired images to reduce the effect of optical shot noise generated by the image sensor 121. Further, the images may be downscaled to reduce computation cost.

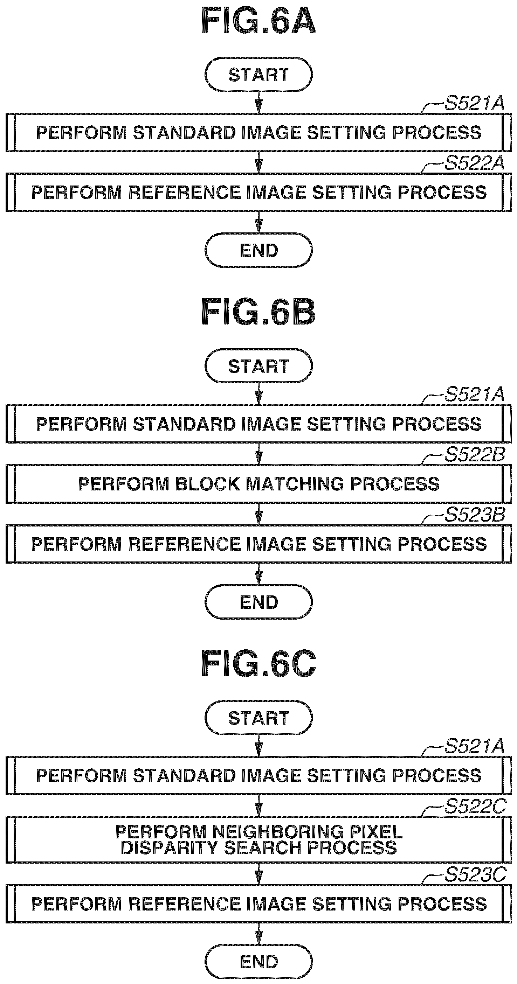

Step S520 is performed by the image setting unit 111. Figs. 6A to 6C are flowcharts detailing the processing of step S520.

The process in Fig. 6A will be initially described below.

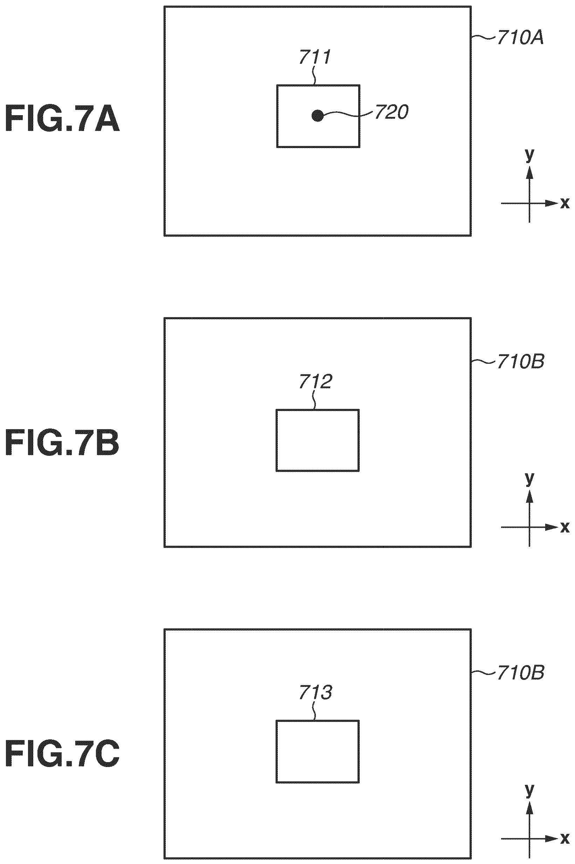

The process of setting a standard image in step S521A will be described below with reference to Fig. 7A.

Fig. 7A illustrates an A-image 710A. In step S521A, a partial region including a pixel-of-interest 720 and its neighboring pixels on the A-image 710A is extracted and set to a standard image 711. Consequently, the specific region of the A-image 710A is set to the standard image 711.

A process of setting a reference image in step S522A will be described below with reference to Fig. 7B.

Fig. 7B illustrates a B-image 710B. In step S522A, a region on the B-image 710B that has the same area (image size) as the standard image 711 is extracted and set to a reference image 712. Thus, the specific region of the B-image 710B is set to the reference image 712. For example, a position shifted by a predetermined amount from the position of the standard image 711 may be set to the reference image 712. A specific example of the predetermined amount is 0.1 pixels. Further, a position same as the position of the standard image 711 may be set to the reference image 712. Specifically, the same coordinates as the standard image 711 for the A-image 710A may be set to the coordinates of the reference image 712 for the B-image 710B.

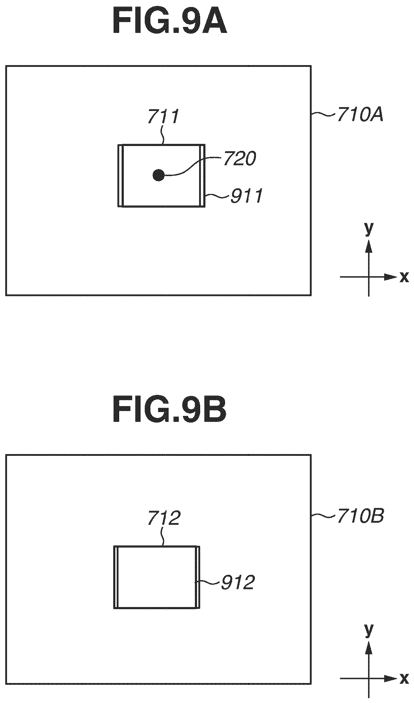

Step S530 is performed by the shifted image generating unit 112. In step S530, a shifted standard image is generated by shifting the standard image 711 by a standard image shift amount, and a shifted reference image is generated by shifting the reference image 712 by a reference image shift amount. The shifted standard image generation and the shifted reference image generation will be described below with reference to Figs. 9A and 9B. The A-image 710A, the standard image 711, and the pixel-of-interest 720 in Fig. 9A are similar to those in Fig. 7A.

A shifted standard image 911 is an image generated by shifting the standard image 711 by 0.1 pixels along the x-axis direction.

The B-image 710B and the reference image 712 in Fig. 9B are similar to those in Fig. 7B. A shifted reference image 912 is an image generated by shifting the reference image 712 by -0.1 pixels along the x-axis direction.

The standard image shift and the reference image shift may be computed using any publicly-known methods. Examples include a method of applying a window function and a method of rotating phase components in the frequency domain. Hereinafter, an image interpolation method will be described below.

A luminance value at a pixel position (x, y) is defined as I(x, y). At this point, the luminance value I(x + $\Delta$x, y + $\Delta$y) after a shift by ($\Delta$x, $\Delta$y) will be discussed below. When generated by linear interpolation, I(x + $\Delta$x, y + $\Delta$y) can be calculated using Equation 1.

[Equation 1]

$$I(x + \Delta x, y + \Delta y) = \\ (1 - \Delta x)(1 - \Delta y)I(x, y) + \Delta x(1 - \Delta y)I(x + 1, y) \\ +(1 - \Delta x)\Delta y I(x, y + 1) + \Delta x \Delta y I(x + 1, y + 1)$$

The same applies to the cases of bilinear interpolation and bicubic interpolation, and the luminance value I(x + $\Delta$x, y + $\Delta$y) can be calculated using the pixel values of the neighboring pixels.

By performing the foregoing computation for all pixels of the standard image and the reference image, a shifted standard image and a shifted reference image can be generated.

At this point, the reference image shift amount and the standard image shift amount may be any values, and the images may be shifted along a two-dimensional direction. The reference image shift amount and the standard image shift amount are desirably less than or equal to one pixel in each dimension because this enables reduction of image interpolation errors.

If the reference image shift amount and the standard image shift amount are equal in absolute value but opposite in sign, the image correction errors caused by the shifts become approximately equal in the standard image and the reference image, thus enabling step S540 described below to be performed with high accuracy.

The standard image shift amount and the reference image shift amount may be determined after subpixel disparity is calculated by performing a conventional subpixel estimation method. Specifically, the subpixel disparity may be the difference between the standard image shift amount and the reference image shift amount. This is efficient because values close to the true disparity value can be set.

The standard image shift amount and the reference image shift amount may be determined based on a calculated disparity value of a neighboring pixel. Specifically, the subpixel disparity of the neighboring pixel may be the difference between the standard image shift amount and the reference image shift amount. This is efficient because a value close to the true disparity value can be set.

Step S540 is performed by the correlation value calculating unit 113. In step S540, correlation values between the shifted standard image and the shifted reference image are calculated.

Any correlation values that enables evaluation of the correlation between a standard image and a reference image candidate may be used, and can be computed using any publicly-known method. For example, SSD, the sum of absolute differences (SAD), or normalized cross correlation (NCC) can be used.

Step S550 is performed by the computation termination determining unit 114. In step S550, it is determined whether to terminate the correlation value computation in step S540.

For example, in cases where the difference between the standard image shift amount and the reference image shift amount in step S530 is outside a predetermined value range, the computation termination determining unit 114 may determine that a predetermined condition is satisfied and the correlation value computation is to be terminated. Since the range in which disparity occurs is limited by the optical system 122, the predetermined value is set within the range. Specifically, in a case where the range in which disparity occurs is from minus 3 pixels to plus 3 pixels, after the correlation value computation for the range from minus 3 pixels to plus 3 pixels is performed, the correlation value computation is terminated.

In a case where a correlation value calculated in step S540 is greater than a previously calculated correlation value (correlation is low) and the previous correlation value is the minimum (correlation is high), the computation termination determining unit 114 may determine that a predetermined condition is satisfied and the correlation value computation is to be terminated. Specifically, in a case where the currently calculated correlation value is lower in correlation than the previously calculated correlation value, the computation termination determining unit 114 may determine that the correlation value computation is to be terminated. This is efficient because the computation can be terminated after fewer iterations.

In a case where the correlation value calculated in step S540 is higher in correlation than the predetermined value, the computation termination determining unit 114 may determine that the correlation value computation is to be terminated. This is efficient because the computation can be terminated after fewer iterations.

Step S560 is performed by the shift amount changing unit 115. In step S560, the standard image shift amount and the reference image shift amount are changed. At this point, the standard image shift amount and the reference image shift amount are changed so that one of the standard image shift amount and the reference image shift amount is in fractional pixel units at least one time.

The amount of change in the standard image shift amount and the amount of change in the reference image shift amount may differ from each other and can be any values. If the changed reference image shift amount and the changed standard image shift amount are equal in absolute value but opposite in sign, the errors caused by the shifts become approximately equal in the standard image and the reference image. This enables step S540 to be performed with high accuracy, improving accuracy.

For example, the standard image shift amount and the reference image shift amount may be changed by a predetermined change amount. Specifically, in a case where the predetermined change amount is set to 0.1 pixels, the standard image shift amount and the reference image shift amount for the first time are respectively set to - 0.1 pixels and +0.1 pixels, and the standard image shift amount and the reference image shift amount for the second time are respectively set to -0.2 pixels and +0.2 pixels. A similar operation applies to the third and subsequent times.

Further, the difference between the standard image shift amount and the reference image shift amount corresponding to the highest correlation among the correlation values calculated in step S540 may be calculated, and the standard image shift amount and the reference image shift amount may be changed to be close to the difference value. For example, in a case where the difference between the standard image shift amount and the reference image shift amount corresponding to the highest correlation is 0.5 pixels, the standard image shift amount and the reference image shift amount are changed so that the difference between the standard image shift amount and the reference image shift amount becomes 0.4 pixels or 0.6 pixels. This is efficient because a value close to the true disparity value can be set to the standard image shift amount and the reference image shift amount.

While the case where the standard image shift amount and the reference image shift amount are less than 1.0 pixel and greater than -1.0 pixel has been described above as an example, there may be cases where the shift amounts are greater than or equal to 1.0 pixel or less than or equal to -1.0 pixel. For example, in a case where the standard image shift amount is 1.6 pixels and the reference image shift amount is -1.7 pixels, the disparity value is 3.3 pixels.

Step S570 is performed by the disparity computing unit 116. In step S570, disparity is calculated from the correlation values between the shifted standard image and the shifted reference image.

Specifically, the standard image shift amount and the reference image shift amount corresponding to the highest correlation among the correlation values are calculated, and the difference between the standard image shift amount and the reference image shift amount is calculated as disparity.

(First Modified Example)

While an example in which the reference image is predefined in step S520 has been described above, block matching may be performed to set the reference image at a position that matches the standard image in integral pixel units. Specifically, a position that is on the B-image 710B and corresponds to the standard image may be searched for and the found position may be set as the position of the reference image. Fig. 6B illustrates a process in this case.

A method of performing block matching and determining the reference image shift amount in step S522B will be described below with reference to Fig. 7C. A region that is on the B-image 710B and has the same area (image size) as the standard image 711 is extracted and set to the reference image candidate 713.

Thereafter, the position at which the reference image candidate 713 on the B-image 710B is extracted is shifted, and correlation values between the reference image candidate 713 and the standard image 711 are calculated for each shift amount (each position). Thus, correlation values including correlation value data sequences for each shift amount are calculated.

The shift amount corresponding to the highest correlation is calculated from the correlation value data sequences, and the calculated shift amount is set to the reference image shift amount.

At this point, the shift direction of the reference image candidate 713 may be any direction. It is also possible to shift two-dimensionally. For efficient calculation of the shift amount that results in higher correlation, it is desirable that the reference image candidate 713 is shifted in the same direction (x-axis direction in the Present Embodiment) as the pupil segmentation direction.

Any correlation values that allow the correlation between the standard image 711 and a reference image candidate 713 to be evaluated is useable, and can be computed using any publicly-known method. For example, SSD or SAD can be used. It is also possible to use NCC.

In step S523B, a position shifted by the shift amount calculated in step S522B from the position of the standard image 711 is set to the reference image.

In this example, a position close to the true disparity value can be set to the reference image, thus enabling step S540 to be performed with high accuracy.

(Second Modified Example)

In step S520, the reference image may be set based on a calculated disparity value of a neighboring pixel. Fig. 6C illustrates a process in this case.

In step S522C, a disparity value of a neighboring pixel is searched for. The disparity value is rounded off, and the resulting value is set to the reference image shift amount.

In step S523C, a position shifted by the shift amount obtained in step S522C from the position of the standard image is set to the reference image.

In this example, a position close to the true disparity value can be set to the reference image without performing the block matching process described in the first modified example, thus enabling step S540 to be performed efficiently with high accuracy.

The fitting to the function is performed based on the assumption that the luminance values change linearly, and the disparity is calculated based on the correlation values calculated from combinations of portions of the standard image and the reference image. Thus, an error in the disparity calculated in a case where a deviation of a luminance value is present increases. On the contrary, the Present Embodiment generates the shifted standard image and the shifted reference image by shifting the standard image and the reference image and calculates correlation values without performing fitting to a function. Then, disparity is calculated based on the correlation value with the highest correlation among the plurality of calculated correlation values, thus enabling highly accurate disparity calculation, even with the presence of luminance value deviations.

<Second Embodiment>

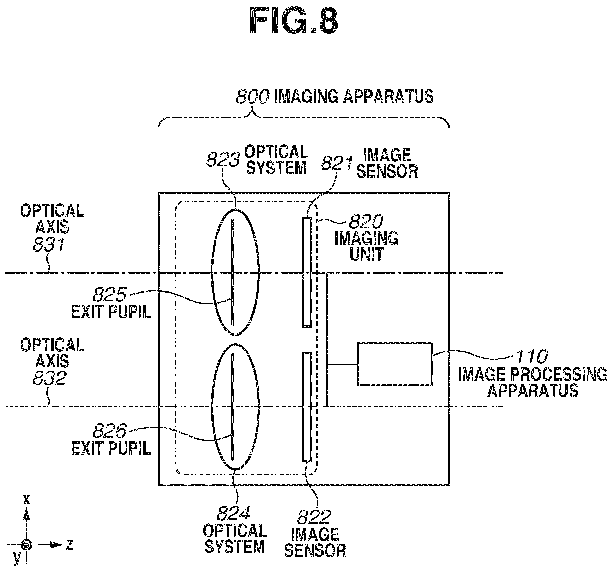

A Second Embodiment of the present invention will be described in detail below with reference to Fig. 8. The components described in the Present Embodiment are merely examples, and the scope of the present invention is not limited to the components described in the Present Embodiment.

(Apparatus Configuration)

Fig. 8 is a diagram schematically illustrating a configuration of an image processing apparatus according to the Present Embodiment of the present invention. In Fig. 8, each component that corresponds to a component illustrated in Fig. 1A is assigned the same number as in Fig. 1A, and redundant descriptions thereof will be omitted.

In Fig. 8, an imaging apparatus 800 includes the image processing apparatus 110 and an imaging unit 820.

Configuration of Imaging Unit

The imaging unit 820 includes two image sensors 821 and 822 and two optical systems 823 and 824. The optical systems 823 and 824 are imaging lenses of the imaging apparatus 800 and have the function of forming a subject image on the image sensor 821 or 822. The optical systems 823 and 824 include a plurality of lens units (not illustrated) and a plurality of diaphragms (not illustrated) and include an exit pupil 825 or 826 at a position at a predetermined distance from the image sensor 821 or 822. At this point, the optical axes of the optical systems 823 and 824 are respectively optical axes 841 and 842.

Calibrating parameters such as the positional relationships of the optical systems 823 and 824 in advance enables accurate calculation of disparity between images. Further, correcting lens distortion in each of the optical systems 823 and 824 also enables accurate calculation of disparity between images.

While two optical systems acquire the images A and B with the disparity corresponding to the distance, in the Present Embodiment, the imaging unit 820 may include a stereo camera including three or more optical systems and image sensors corresponding to the optical systems.

The imaging apparatus 800 according to the Present Embodiment enhances the design flexibility of the baseline length and improves the distance measurement resolution. Even if there are differences in sensor sensitivity and exposure time between cameras, disparity can still be calculated with high accuracy.

The present invention encompasses computer programs as well as distance measuring apparatuses. The computer programs according to the Present Embodiment cause a computer to execute predetermined processes to calculate a distance or disparity amount. The programs according to the Present Embodiment are installed in a computer of a distance measuring apparatus or an imaging apparatus, such as a digital camera, including the same. The functions described above are realized through execution of the installed programs by the computer, enabling highly accurate disparity calculation at high speed.

(Other Embodiment)

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

The present invention provides an image processing apparatus capable of calculating disparity with high accuracy.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus configured to calculate a disparity value from a first image and a second image, the image processing apparatus comprising at least one processor or circuit configured to function as:

   an image setting means for setting a specific region in the first image as a standard image and a specific region in the second image as a reference image;
   a shifted image generating means for generating a shifted standard image by shifting the standard image based on a first shift amount and generate a shifted reference image by shifting the reference image based on a second shift amount;
   a correlation value calculating means for calculating a correlation value between the shifted standard image and the shifted reference image; and
   a disparity calculating means for calculating the disparity value based on the first shift amount and the second shift amount,
   wherein the shifted image generating means sets one of the first shift amount and the second shift amount in fractional pixel units.

2. The image processing apparatus according to claim 1, wherein the disparity calculating means calculates, as the disparity value, a difference between the first shift amount and the second shift amount from which the correlation value is calculated.

3. The image processing apparatus according to claim 1, wherein the shifted image generating means generates the shifted standard image and the shifted reference image with the first shift amount and the second shift amount that are equal in absolute value but opposite in shift direction.

4. The image processing apparatus according to claim 1, wherein the image setting means searches for a position, on the second image, of the reference image that corresponds to the standard image in integral pixel units, and sets the position as the reference image.

5. The image processing apparatus according to claim 1, wherein the shifted image generating means fits the correlation value to a function and estimates, as the disparity value, a position of the reference image that corresponds to the standard image, sets the estimated disparity value as the disparity value of the first shift amount and the second shift amount, and generates the shifted standard image and the shifted reference image.

6. The image processing apparatus according to claim 1, wherein the image setting means sets the specific region in the second image as the reference image based on the calculated disparity value of a neighboring pixel.

7. The image processing apparatus according to claim 1, wherein the shifted image generating means generates the shifted standard image and the shifted reference image based on the calculated disparity value of a neighboring pixel.

8. The image processing apparatus according to claim 1,

   wherein, in a case where the first shift amount is a fractional pixel, the shifted image generating means generates the shifted standard image using a pixel value of a neighboring pixel of each pixel in the standard image, and
   wherein, in a case where the second shift amount is a fractional pixel, the shifted image generating means generates the shifted reference image using a pixel value of a neighboring pixel of each pixel in the reference image.

9. The image processing apparatus according to any one of claims 1 to 8, further comprising a shift amount changing means and a computation termination determining means,

   wherein the shift amount changing means changes the first shift amount and the second shift amount, and
   wherein the computation termination determining means executes the disparity calculating means in a case where a predetermined condition is satisfied.

10. The image processing apparatus according to claim 9, wherein the shift amount changing means changes the first shift amount and the second shift amount based on a predetermined change amount.

11. The image processing apparatus according to claim 9, wherein the shift amount changing means changes the first shift amount and the second shift amount to a value close to a difference between the first shift amount and the second shift amount from which one of at least two correlation values with the highest correlation is calculated.

12. The image processing apparatus according to claim 9, wherein the predetermined condition is that a difference between the first shift amount and the second shift amount is outside a predetermined value range.

13. The image processing apparatus according to claim 9, wherein the predetermined condition is that the correlation value currently calculated is lower in correlation than the correlation value previously calculated.

14. An imaging apparatus comprising:

   an imaging means; and
   the image processing apparatus according to claim 9.

**15.** The imaging apparatus according to claim 14,
wherein the imaging means includes an optical system and an image sensor,

wherein the optical system forms an image of a subject on the image sensor, and
wherein the image sensor includes a plurality of first photoelectric conversion means configured to generate the first image and a plurality of second photoelectric conversion means configured to generate the second image.

**16.** The imaging apparatus according to claim 14,

wherein the imaging means includes:

a first image sensor;
a first optical system configured to form an image of a subject on the first image sensor;
a second image sensor; and
a second optical system configured to form a subject image on the second image sensor, and

wherein the first image sensor acquires the first image, and the second image sensor acquires the second image.

**17.** An image processing method with which a central processing unit (CPU) calculates a disparity value from a first image and a second image, the image processing method comprising:

setting a specific region in the first image as a standard image and a specific region in the second image as a reference image;
generating a shifted standard image by shifting the standard image based on a first shift amount and generating a shifted reference image by shifting the reference image based on a second shift amount;
calculating a correlation value between the shifted standard image and the shifted reference image; and
calculating the disparity value based on the first shift amount and the second shift amount,
wherein, in the shifted image generating, one of the first shift amount and the second shift amount is set in fractional pixel units.

**18.** A computer-readable storage medium storing a program for causing a computer to perform the image processing method according to claim 17.

# FIG.1A

*100* IMAGING APPARATUS

OPTICAL AXIS *130*

*120* IMAGING UNIT

*121* IMAGE SENSOR

*123* EXIT PUPIL

*110* IMAGE PROCESSING APPARATUS

*122* OPTICAL SYSTEM

# FIG.1B

*121* IMAGE SENSOR

GREEN PIXEL *150G1*

RED PIXEL *150R*

*162* SECOND PHOTOELECTRIC CONVERSION UNIT

*161* FIRST PHOTOELECTRIC CONVERSION UNIT

*150B* BLUE PIXEL

*150G2* GREEN PIXEL

*150* PIXEL GROUP

# FIG.1C

GREEN PIXEL *150G1*

RED PIXEL *150R*

*183* MICROLENS

*181* LIGHT-GUIDING LAYER

*182* LIGHT-RECEIVING LAYER

*161* FIRST PHOTOELECTRIC CONVERSION UNIT

*162* SECOND PHOTOELECTRIC CONVERSION UNIT

# FIG.2

# FIG.3A

# FIG.3B

# FIG.4A

# FIG.4B

# FIG.5A

*110*

**IMAGE PROCESSING APPARATUS**

| | |
|---|---|
| **IMAGE SETTING UNIT** | *111* |

*115*

| | | |
|---|---|---|
| **SHIFT AMOUNT CHANGING UNIT** | **SHIFTED IMAGE GENERATING UNIT** | *112* |

| | |
|---|---|
| **CORRELATION VALUE CALCULATING UNIT** | *113* |

| | |
|---|---|
| **COMPUTATION COMPLETION DETERMINING UNIT** | *114* |

| | |
|---|---|
| **DISPARITY COMPUTING UNIT** | *116* |

# FIG.5B

START

PERFORM IMAGE ACQUISITION — *S510*

PERFORM IMAGE SETTING PROCESS — *S520*

*S560*
PERFORM SHIFT AMOUNT CHANGING PROCESS

PERFORM SHIFTED IMAGE GENERATING PROCESS — *S530*

PERFORM CORRELATION VALUE CALCULATING PROCESS — *S540*

TERMINATE CALCULATION? — *S550*

NO

YES

PERFORM DISPARITY COMPUTING PROCESS — *S570*

END

# FIG.6A

START

PERFORM STANDARD IMAGE SETTING PROCESS ⟋S521A

PERFORM REFERENCE IMAGE SETTING PROCESS ⟋S522A

END

# FIG.6B

START

PERFORM STANDARD IMAGE SETTING PROCESS ⟋S521A

PERFORM BLOCK MATCHING PROCESS ⟋S522B

PERFORM REFERENCE IMAGE SETTING PROCESS ⟋S523B

END

# FIG.6C

START

PERFORM STANDARD IMAGE SETTING PROCESS ⟋S521A

PERFORM NEIGHBORING PIXEL DISPARITY SEARCH PROCESS ⟋S522C

PERFORM REFERENCE IMAGE SETTING PROCESS ⟋S523C

END

**FIG.7A**

**FIG.7B**

**FIG.7C**

# FIG.8

# FIG.9A

711
710A
720
911

y
x

# FIG.9B

712
710B
912

y
x

Europäisches
Patentamt

European
Patent Office

Office européen
des brevets

## EUROPEAN SEARCH REPORT

Application Number

EP 25 15 7873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CHONGHUN ROH ET AL: "Symmetrical dense disparity estimation: algorithms and FPGAs implementation", CONSUMER ELECTRONICS, 2004 IEEE INTERNATIONAL SYMPOSIUM ON READING, UK SEPT. 1-3, 2004, PISCATAWAY, NJ, USA, IEEE, PISCATAWAY, NJ, USA, 1 September 2004 (2004-09-01), pages 452-456, XP010755912, DOI: 10.1109/ISCE.2004.1375987 ISBN: 978-0-7803-8527-6 * the whole document * | 1-18 | INV. H04N13/106 |
| Y | WO 2014/069196 A1 (HITACHI AUTOMOTIVE SYSTEMS LTD [JP]) 8 May 2014 (2014-05-08) * paragraph [0036] * | 1-18 | |
| A | JP 4 941565 B2 (CANON KABUSHIKI KAISHA) 30 May 2012 (2012-05-30) * paragraph [0005] * | 1-18 | |
| | | | **TECHNICAL FIELDS SEARCHED (IPC)** |
| | | | H04N |

The present search report has been drawn up for all claims

| Place of search | Date of completion of the search | Examiner |
|---|---|---|
| The Hague | 11 July 2025 | Wahba, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 7873

This annex lists the patent family members relating to the patent documents cited in the above-mentioned European search report.
The members are as contained in the European Patent Office EDP file on
The European Patent Office is in no way liable for these particulars which are merely given for the purpose of information.

11-07-2025

| Patent document cited in search report | Publication date | Patent family member(s) | | Publication date |
|---|---|---|---|---|
| WO 2014069196 A1 | 08-05-2014 | JP | 5918684 B2 | 18-05-2016 |
| | | JP | 2014089498 A | 15-05-2014 |
| | | WO | 2014069196 A1 | 08-05-2014 |
| JP 4941565 B2 | 30-05-2012 | JP | 4941565 B2 | 30-05-2012 |
| | | JP | WO2009096520 A1 | 26-05-2011 |
| | | WO | 2009096520 A1 | 06-08-2009 |

EPO FORM P0459

For more details about this annex : see Official Journal of the European Patent Office, No. 12/82

**EP 4 611 366 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4941565 B